# EUROPEAN PATENT SPECIFICATION

(11) **EP 3 123 084 B1**
(45) Date of publication and mention of the grant of the patent: **03.11.2021**
(21) Application number: 15711745.8
(22) Date of filing: 23.03.2015
(51) Int. Cl.: F25B 49/00, G01F 23/24

(54) **DEVICE AND METHOD FOR DETERMINING THE FILLING HEIGHT OF LIQUID REFRIGERANT IN A CONTAINER**
VORRICHTUNG UND VERFAHREN ZUR BESTIMMUNG DES FÜLLSTANDES VON FLÜSSIGEM KÄLTEMITTEL IN EINEM BEHÄLTER
DISPOSITIF ET PROCÉDÉ PERMETTANT DE DÉTERMINER LA HAUTEUR DE REMPLISSAGE DE REFRIGERANT LIQUIDE DANS UN RÉCIPIENT

(30) Priority: 27.03.2014 US 201461970928 P
(43) Date of publication of application: 01.02.2017
(73) Proprietor: Carrier Corporation, Farmington, CT 06034 (US); Hellmann, Sascha, 55246 Mainz-Kostheim (DE)
(72) Inventor: HELLMANN, Sascha, 55246 Mainz-Kostheim (DE)
(74) Representative: Schmitt-Nilson Schraud Waibel Wohlfrom Patentanwälte Partnerschaft mbB
(86) International application number: PCT/EP2015/056085
(87) International publication number: WO 2015/144627

(56) References cited:
- EP-A2- 1 645 852
- WO-A1-97/19328
- WO-A1-2012/168544
- DE-A1- 3 824 663
- DE-A1- 4 434 559
- DE-A1- 19 714 534
- DE-A1- 19 715 276
- US-A- 5 655 379
- US-A1- 2005 265 425

## Description

### FIELD OF THE INVENTION

The invention is related to a method and a device for determining the filling height of liquid refrigerant in a refrigerant collecting container of a refrigerant circuit.

### BACKGROUND OF THE INVENTION

Refrigerating circuits are frequently equipped with a collecting container (refrigerant receiver) for storing excess refrigerant.

US 5 655 379 A discloses a refrigeration system with a phase separator disposed in flow communication with a pulse width modulated solenoid valve. A thermistor is disposed in the phase separator and is submerged in either refrigerant liquid or refrigerant vapor during operation, with the electrical resistance thereof correspondingly changing. In an exemplary embodiment, a second thermistor is used in conjunction with the first thermistor and is disposed in the vapor inside the phase separator to provide a reference. By comparing voltage developed across the two thermistors during operation it may be determined whether one or both of the thermistors are submersed in the vapor. The duty cycle of the valve may therefore be increased when one of the thermistors is submerged in the liquid, and decreased when both thermistors are submersed in the vapor.

EP 1 645 852 A2 discloses an apparatus for controlling a refrigerant level comprises a first detecting unit installed at a lower side of the inside of a refrigerant tank, for detecting whether a refrigerant stored at a lower side of the inside of the refrigerant is a liquefied refrigerant or a gaseous refrigerant, a second detecting unit installed at an upper side of the inside of the refrigerant tank, for detecting whether a refrigerant stored at an upper side of the inside of the refrigerant tank is a liquefied refrigerant and a gaseous refrigerant, and a control unit controlling intake and discharge of the liquefied refrigerant according to a value measured by the first detecting unit and the second detecting unit.

### SUMMARY OF THE INVENTION

There is a desire for inexpensive means allowing to accurately determine the level of liquid refrigerant stored within such a refrigerant receiver.

According to an exemplary embodiment of the invention, a device for determining the filling height of liquid refrigerant in a refrigerant collecting container of a refrigerant circuit, comprises a plurality of temperature sensors arranged in one extension at different positions and at least one heating device configured for heating the temperature sensor, wherein the plurality of temperature sensors and the at least one heating device are configured to be positioned along a vertical extension of the container. The device further comprises an analysing unit connected to the temperature sensors for receiving output signals from the temperature sensors which is configured to determine the filling height of refrigerant within the container based on the output signals received from the temperature sensors. The device further comprises a measurement pipe arranged to be fluidly connected to the refrigerant collecting container and the temperature sensors are attached to the measurement pipe.

An exemplary method of determining the filling height of liquid refrigerant in a refrigerant collecting container of a refrigerant circuit, comprises the steps of:
heating a plurality of temperature sensors attached at different heights to a measurement pipe, which is fluidly connected to the refrigerant collecting container and which extends along a vertical extension of the refrigerant collecting container; and
determining the filling height of liquid refrigerant within in the refrigerant collecting container based on output signals provided by the temperature sensors.

### BRIEF DESCRIPTION OF THE DRAWINGS

Exemplary embodiments of the invention, which will be described in more detail below with reference to the enclosed figures, allow to determine the amount of liquid refrigerant stored within a refrigerant collecting container of a refrigerant circuit, with high accuracy. As there is no need to provide any moving parts, as e.g. a floating gauge, the costs for manufacture and maintenance are low.
Fig. 1 shows a schematic view of a refrigerant circuit according to an embodiment of the invention;
Fig. 2 shows a refrigerant collecting container unit according to an embodiment of the invention comprising a refrigerant collecting container and a device for determining the filling height of liquid collected within the collecting container;
Fig. 3 shows a refrigerant collecting container unit according to an alternative embodiment not covered by the claimed invention comprising a refrigerant collecting container and a device for determining the filling height of liquid collected within the collecting container;
Fig. 4 shows a schematic illustration of an exemplary embodiment of a measuring circuit to be used in a device for determining the filling height of liquid in a collecting container; and
Fig. 5 shows a diagram in which the total resistance R of the measuring circuit of Fig. 4 is plotted on the y-axis as a function of the level L, which is plotted on the x-axis, of liquid refrigerant collected within a collecting container.

### DETAILED DESCRIPTION OF THE DRAWINGS

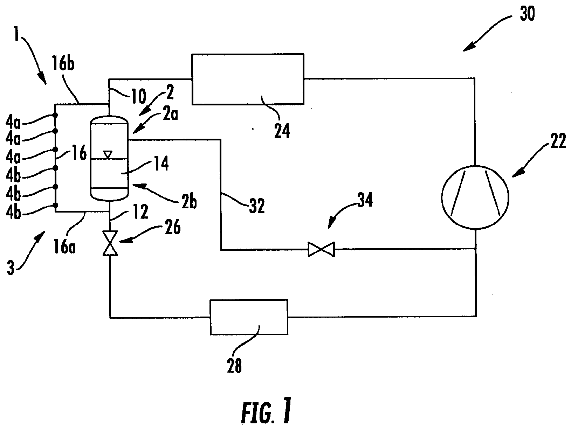

Fig. 1 shows an embodiment of a refrigerant circuit 30 comprising in the direction of the flow of a circulating refrigerant a compressor unit 22 with at least one compressor, a condenser 24, a refrigerant collecting container 2 for collecting refrigerant exiting the condenser 24 and separating the refrigerant's gas portion from its liquid portion, an expansion device 26 for expanding the liquid refrigerant exiting the collecting container 2, and an evaporator 28 for evaporating the expanded refrigerant, which is then delivered to an inlet of the compressor unit 22.

An upper portion 2a of the collecting container 2 may be fluidly connected to the inlet of the compressor unit 22 by means of a flash-gas tapping line 32 provided with a flash-gas tapping valve 34 allowing to selectively deliver a gas-phase portion of the refrigerant collecting in the upper portion 2a of the collecting container 2 directly into the compressor unit 22 by-passing the expansion device 26 and the evaporator 28.

In order to allow to determine the amount of liquid refrigerant 14 collected within the collecting container 2, the collecting container 2 of the refrigerant circuit 30 shown in Fig. 1 is provided with a device 3 for determining the filling height of liquid 14 within a collecting container 2 according to an exemplary embodiment of the invention. Exemplary embodiments of said device will be described in the following in more detail.

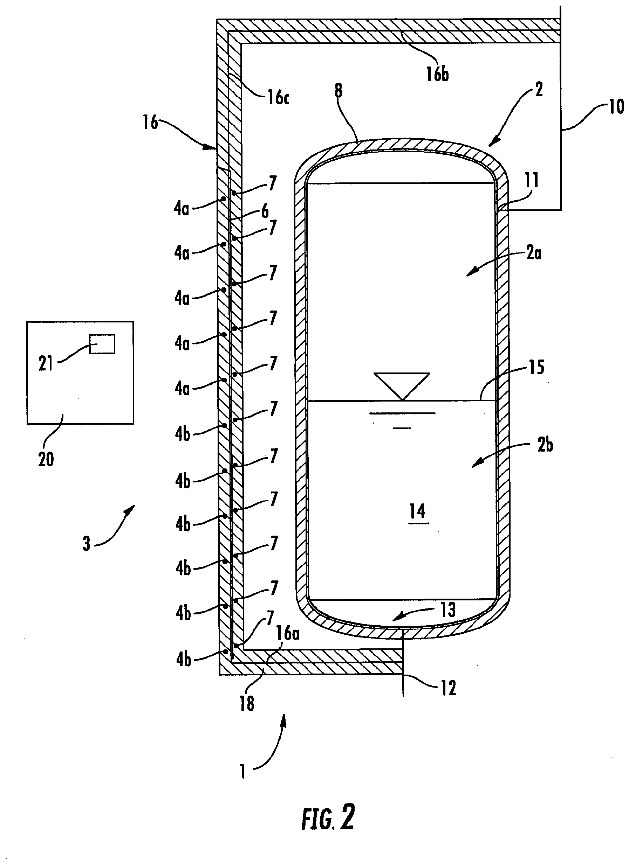

Fig. 2 shows a refrigerant collecting container unit 1 according to a first embodiment of the invention comprising a refrigerant collecting container 2, which in particular may be a CO₂ flash gas receiver, and a device 3 for determining the filling height of liquid 14 collected within the collecting container 2.

The collecting container 2 comprises an inlet port 11, which opens into its upper portion 2a and which is connected to an refrigerant inlet line 10 for delivering refrigerant into the collecting container 2, and an outlet port 13, which opens into the collecting container's 2 lower portion 2b and which is connected to an refrigerant outlet line 12.

A gas phase portion of the refrigerant delivered into the collecting container 2 will collect within the upper portion 2a of the collecting container 2 and a liquid portion 14 of the refrigerant will collect in the container's lower portion 2b up to a level 15 delimiting the gas phase portion from the liquid portion 14.

In order to avoid a transfer of external heat from the environment into the collecting container 2, which would cause an undesired evaporation of liquid refrigerant 14, the collecting container 2 is coated with a thermally insulating jacket or coating 8. The inlet line 10 and the outlet line 12 may be thermally insulated, as well, which, however, is not shown in the figures.

In order to allow the determination of the filling height of liquid refrigerant 14 collected within the collecting container 2 in a first embodiment of the invention a measurement pipe 16 is fluidly connected between the inlet line 10 and the outlet line 12 in parallel to the collecting container 2, as it is shown in Fig. 2. In order to avoid an undesired transfer of heat to the liquid refrigerant 14 collected within the measurement pipe 16, the measurement pipe 16 is provided with a thermally insulating jacket or coating 18, as well.

The measuring pipe 16 in particular comprises a lower portion 16a connected to the collecting container's 2 outlet line 12 and an upper portion 16b connected to the collecting container's 2 inlet line 10. The lower portion 16a and the upper portion 16b are connected to each other by means of a basically vertically extending portion 16c of the measurement pipe 16. Due to the hydrostatic pressure of the liquid refrigerant 14 collected within the collecting container 2 the level of liquid refrigerant 14 within the vertical portion 16c of the measurement pipe 16 always coincides with the level 15 of liquid refrigerant 14 collected within the collecting container 2. In conseqeunce, the height of the level 15 of the liquid refrigerant 14 collected within the collecting container 2 may be determined by determining the height of the level of liquid refrigerant 14 within the vertical portion 16c of the measurement pipe 16.

In order to determine the level of liquid refrigerant 14 within the vertical portion 16c of the measurement pipe 16, a plurality of temperature sensors 4a, 4b, e.g. five to fifteen, in particular ten, temperature sensors 4a, 4b, are arranged along the length/height of the vertical portion 16c of the measurement pipe 16. In addition, a heating device 6 is provided along the length/height of the vertical portion 16c of the measurement pipe 16, as well.

In operation, the heating device 6 is operated for transferring a certain amount of heat to the vertical portion 16c of the measurement pipe 16 and in particular to the temperature sensors 4a, 4b. The heating power of the heating device 6 in particular may be adjusted not to deliver more heat to the liquid refrigerant 14 than the liquid refrigerant 14, which is present within the measurement pipe 16, is able to dispose without increasing its temperature.

In the lower part of the vertical portion 16c of the measurement pipe 16, which is filled with liquid refrigerant 14 up to the level 15 of liquid refrigerant 14 collected within the collecting container 2, the heat provided by the heating device 6 is transferred to the liquid refrigerant 14. In consequence, the temperature of said lower part of the vertical portion 16c of the measurement pipe 16 and the temperature sensors 4a arranged in said lower region does not increase considerably despite the heating.

In contrast, in the upper part of the vertical portion 16 of the measurement pipe 16, in which no liquid refrigerant 14 is present, the heat provided by the heating device 6 results in a considerable increase of the temperature of the measurement pipe 16 and the temperature sensors 4a arranged in said upper region, as the cooling capacity of gas-phase refrigerant is much lower than the cooling capacity of liquid refrigerant 14.

Thus, the temperature sensors 4a provided at the upper part of the vertical portion 16c of the measurement pipe 16 will detect a considerably higher temperature than the temperature sensors 4b provided at the lower part of the vertical portion 16c of the measurement pipe 16.

In consequence, the height of the level of liquid refrigerant 14 within the vertical portion 16c of the measurement pipe 16, which is identical to the level 15 of liquid refrigerant 14 within the collecting container 2, may be determined by analysing the outputs of the temperature sensors 4a, 4b.

By measuring the pressure of the gaseous refrigerant stored in the upper portion 2a of the collecting container 2 the temperature of the gaseous refrigerant at the outlet of the measurement pipe 16 can be determined (e.g. for CO₂ a pressure of 35 bar corresponds to a temperature of 0 °C), which is beneficial for analysing the outputs of the temperature sensors 4a, 4b in order to accurately determine the level 15 of liquid refrigerant 14 stored within the collecting container 2.

The temperature sensors 4a, 4b are electrically connected by electric wires, which are not shown in the figures, to an analysing unit 20, which is configured for analysing the outputs provided by the temperature sensors 4a, 4b for providing a signal which is representative of the level 15 of liquid refrigerant 14 collected within the collecting container 2. In case the temperature sensors 4a, 4b are provided by temperature sensitive resistors the analysing unit 20 may comprise a resistance measuring unit 21, which is configured for measuring the varying resistance of the temperature sensitive resistors.

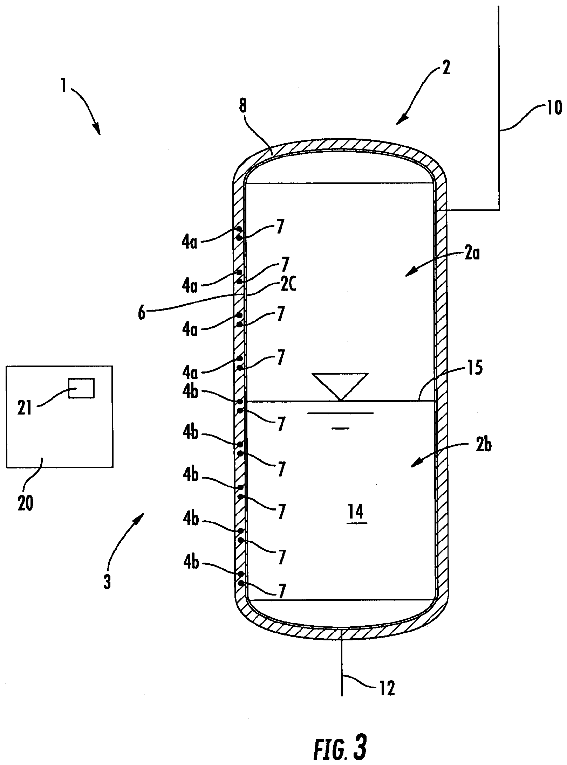

Fig. 3 shows an alternative embodiment which is not covered by the claimed invention, in which the heating device 6 and the temperature sensors 4a, 4b are attached directly to an outer wall 2c of the collecting container 2. Thus, in said embodiment the additional measurement pipe 16 connected in parallel to the collecting container 2 is omitted. As in said embodiment the heating device 6 and the temperature sensors 4a, 4b are attached directly to the outer wall 2c of the collecting container 2 inside the collecting container's 2 thermally insulating jacket or coating 8, the installation and the maintenance of the heating device 6 and the temperature sensors 4a, 4b may be more difficult than in the first embodiment comprising an additional measurement pipe 16.

The functionality of determining the height of the level 15 of liquid refrigerant 14 within the collecting container 2 according to the second embodiment corresponds to the method of the first embodiment with the only difference that the height of the level 15 of liquid refrigerant 14 within the collecting container 2 is determined directly by means of the temperature sensors 4a, 4b instead of determining the level of liquid refrigerant 14 within a communicating measurement pipe 16c.

In both embodiments shown in Figs. 2 and 3 the temperature sensors 4a, 4b may be arranged equidistantly along the height of the collecting container 2 or the longitudinal extension of the vertical portion 16c of the measurement pipe 16, respectively. Alternatively, the temperature sensors 4a, 4b may be arranged at varying distances with the distances between adjacent temperature sensors 4a, 4b being smaller in more important regions in order to provide a higher resolution for determining the amount of liquid refrigerant 14 stored within the collecting container 2 in said regions.

The temperature sensors 4a, 4b may be provided by temperature sensitive resistors and the heating device 6 may comprise a plurality of heating elements 7 such as PTC-elements. The heating device 6, in particular, may be a self-regulating heating cable providing a constant heating over its entire length without the need for any additional temperature control means.

In an embodiment the same PTC-elements may be alternatingly used as heating elements 7 of the heating device 6 and as temperature sensors 4a, 4b, respectively, by supplying energy to the PTC-elements in a first (heating) mode and by measuring the resistance of the PTC-elements in a second (measuring) mode in which the PTC-elements are operated as temperature sensors 4a, 4b.

In both embodiments the temperature sensors 4a, 4b may be sandwiched between the heating device 6 and the outer wall of the vertical portion 16c of the measurement pipe 16 or the outer wall of the collecting container 2, respectively. Alternatively, the temperature sensors 4a, 4b may be arranged laterally adjacent to the heating device 6 on the outer wall of the vertical portion 16c of the measurement pipe 16 or on the outer wall 2c of the collecting container 2, respectively.

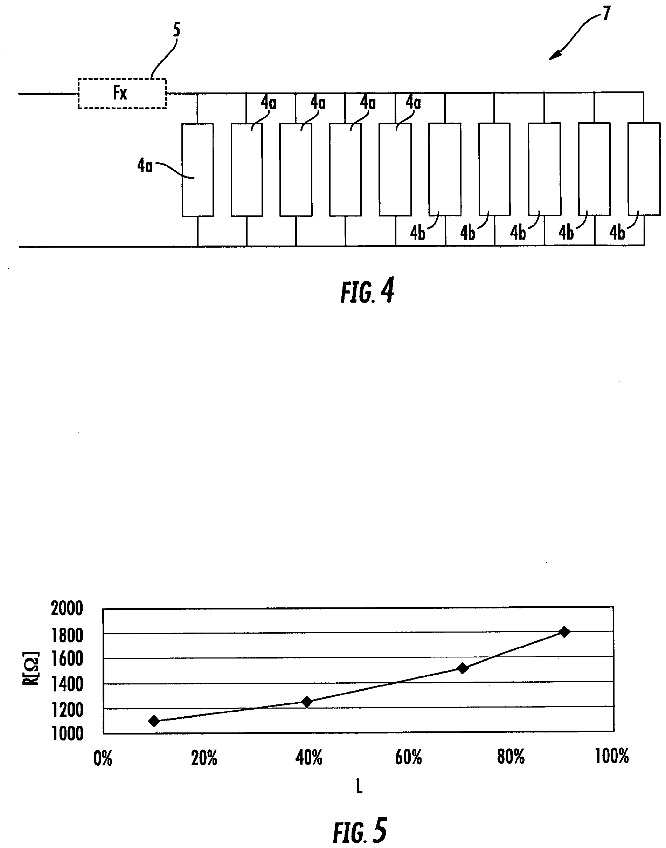

Fig. 4 shows a schematic illustration of an exemplary embodiment of a measuring circuit 7 to be used in a device 3 for determining the filling height of liquid in a container 2 comprising a plurality of temperature sensors 4a, 4b connected in parallel to each other. In this embodiment, the temperature sensors 4a, 4b are provided as temperature sensitive resistors. Thus, the resistance of each of the temperature sensors 4a, 4b varies as function of its respective temperature and the total (combined) resistance of all temperature sensors 4a, 4b connected in parallel varies depending on the number of temperature sensors 4a having a first (higher) temperature and the number of temperature sensors 4b having a second (lower) temperature. Thus, the number of temperature sensors 4a having the first temperature and the number of temperature sensors 4b having the second temperature may be determined by measuring the total resistance of all temperature sensors 4a, 4b connected in parallel, providing a definite indicator of the amount of liquid refrigerant 14 collected within the collecting container 2, as it has been described before with reference to Figs. 2 and 3, respectively.

In the embodiment shown in Fig. 4 an additional series resistor 5, which may be provided within or outside the analysing unit 20, is serially connected with the parallel arrangement of temperature sensors 4a, 4b in order to adjust the total resistance to predetermined control measurement requirements and/or to adjust for different types of temperature sensors 4a, 4b. The additional series resistor 5 may be an adjustable resistor in order to facilitates the adjustment.

In an exemplary embodiment a first portion of the temperature sensors 4a having a temperature of 22 °C may have a resistance of e.g. 5767 Ohm and a second portion of the temperature sensors 4b having a temperature of 2 °C may have a resistance of e.g. 14693 Ohm. This combination results in a total resistance of the temperature sensors 4a, 4b connected in parallel of 828 Ohm indicating a filling level of 50%, in which half of the temperature sensors 4a, 4b have the lower temperature 2 °C and half of the temperature sensors 4a, 4b have the higher temperature of 22 °C.

Said value of 828 Ohm may be shifted e.g. to 1328 Ohm by providing an additional series resistor 5 of 500 Ohm in order to adjust the value to predetermined control measurement requirements.

In an alternative embodiment, which is not shown in the figures, the temperature sensors 4a, 4b may be arranged serially with each other, which, however, requires to accurately determine the total resistance of the serial combination of temperature sensors 4a, 4b over a wider range than in the case of a parallel arrangement for determining the level 15 of liquid refrigerant 14 within a collecting container 2.

Fig. 5 shows a diagram in which the total resistance R of the measuring circuit 7 depicted in Fig. 4 is plotted on the y-axis as a function of the level L, which is plotted on the x-axis, of liquid refrigerant 14 collected within the collecting container 2.

Fig. 5 clearly indicates that the amount of liquid refrigerant 14 stored within the collecting container 2 may be determined uniquely and accurately by measuring the resistance of the measuring circuit 7, which is schematically shown in Fig. 4.

In an embodiment the temperature sensors are arranged equidistantly providing the same resolution over the whole height of the container. In an alternative embodiment, the temperature sensors are arranged with varying distances allowing to provide a finer resolution in selected areas by providing a denser concentration of temperature sensors in said areas.

In an embodiment the heating device provides heat with a constant, preferably predetermined temperature, allowing to determine the filling height of the liquid within the container even more accurately. In an embodiment the temperature is set to a value which allows an accurate determination of the filling level but avoids an unnecessary transfer of heat to the refrigerant stored within the container, as this would result in an increase of the energy consumed for operating the refrigeration circuit, as additional energy would be needed for removing said additional heat from the refrigerant. The heating power of the heating device in particular may be adjusted not to deliver more heat to the liquid refrigerant than the liquid refrigerant present within the measurement pipe is able to dispose without increasing its temperature.

In an embodiment the analysing unit is configured to take into account that the temperature sensors which are positioned at positions of height where there is no liquid in the container are heated to a higher temperature than temperature sensors which are positioned at positions of height where liquid is present in the container in order to determine the filling height of the liquid within the container.

Since, due to a higher cooling capacity of liquid refrigerant compared to gas-phase refrigerant, temperature sensors which are provided in regions of the container filled with liquid refrigerant are cooled by said liquid refrigerant considerably more than temperature sensors which are arranged in regions comprising gas-phase refrigerant, the different temperatures sensed by the temperature sensors allow an accurate determination of the height of liquid stored within the container.

In an embodiment the temperature sensors are formed as temperature sensitive resistors providing accurate, inexpensive and reliable temperature sensors, which may be purchased off the shelf.

In an embodiment the analysing unit comprises a total resistance measuring unit which is configured for measuring the total resistance value of the temperature sensitive resistors, as such total resistance value is indicative of the filling height of liquid in the container.

The temperature sensitive resistors may be connected serially allowing an easy installation of the resistors as a chain of consecutively connected resistors.

Alternatively, the temperature sensitive resistors may be connected parallel to each other in order to reduce the range of electrical resistance to be covered by the total resistance measuring unit when measuring the electrical resistance of the combination of temperature sensitive resistors.

In an embodiment a series resistor is connected serially with the temperature sensitive resistors connected in parallel or serially with each other, in order to match the total resistance of the combination of resistors for matching controls measurement requirements or adjust for different sensor types. The series resistor, which may be provided within or outside the analysing unit, may be an adjustable resistor allowing to adjust its resistance to matching controls measurement requirements and/or different sensor types.

In an embodiment the heating device comprises a plurality of heating elements, in particular PTC-elements, which provide an inexpensive and reliable heating device.

In an embodiment the temperature sensors are operable as heating elements so that the same elements may by operated alternately as temperature sensors and as heating elements. This allows to reduce the costs even further, as only a single type of elements needs to be provided.

In an embodiment the heating device comprises a self-regulating heating cable which may be purchased off the shelf and provides a constant temperature without the need for additional heating control means.

In an embodiment the temperature sensors are located adjacent to the heating device providing an effective heating of the temperature sensors in a compact arrangement. In order to reduce the space needed even further and to facilitate the installation, the temperature sensors and the heating device may be provided as a combined heating/sensor unit.

The temperature sensors may be sandwiched between the heating device and the measurement pipe in order to optimise the transfer of heat from the heating device to the temperature sensors.

In an embodiment a device for determining the filling height of liquid refrigerant is provided in a refrigerant collecting container unit of a refrigerant circuit further comprising a refrigerant collecting container, particularly a CO₂ flash gas receiver having an upper gas space where gaseous refrigerant collects, a lower liquid space where refrigerant collects, an inlet port in an upper portion of the container to be connected with a refrigerant inlet line, particularly for receiving refrigerant, and an outlet port in a lower portion of the container to be connected with a refrigerant outlet line, particularly for feeding liquid refrigerant to an expansion device and a following evaporator. The plurality of temperature sensors and the at least one heating device may be positioned along a vertical extension of the refrigerant collecting container unit. This embodiment provides a refrigerant collecting container unit allowing to accurately determine the amount of liquid refrigerant stored therein, which may be produced and operated at low costs.

The device comprises a measurement pipe fluidly connected to the refrigerant collecting container such that the level of liquid within the measurement pipe is identical with the level of liquid within the container. The temperature sensors and/or the heating device are attached to the measurement pipe, in particular to the outside of the measurement pipe. Such a configuration facilitates the installation and maintenance of the measuring device, as there is no need to install the temperature sensors and/or the heating device between the collecting container and its thermal insulation and/or to remove the thermal insulation from the collecting container in order to access the temperature sensors and/or the heating device for maintenance and/or replacement.

In an embodiment the measurement pipe is connected in parallel to the refrigerant collecting container. In this configuration the level of liquid within the measurement pipe matches with the level of liquid refrigerant stored within the collecting container due to the principle of communicating pipes. This allows to determine the level of liquid refrigerant stored within the collecting container by means of measuring the level of liquid within the measurement pipe. In a particular embodiment a measurement pipe's first (upper) portion branches off from the refrigerant collecting container's inlet line and a second (lower) portion of the measurement pipe is fluidly connected to the refrigerant collecting container's outlet line.

In an embodiment the temperature sensors are attached to the outside of the refrigerant collecting container, which avoids the need for an additional measurement pipe. The temperature sensors in particular may be sandwiched between the heating device and the refrigerant collecting container in order to allow an effective transfer of heat from the heating device to the temperature sensors.

In an embodiment the refrigerant collecting container unit is part of a refrigerant circuit further comprising, in the direction of flow of the refrigerant, an expansion device fluidly connected to an outlet of the refrigerant collecting container, an evaporator, a compressor unit, and a condenser, wherein an outlet of the condenser is fluidly connected to an inlet of the refrigerant collecting container. Providing a refrigerant circuit in which the amount of refrigerant collected within its collecting container may be determined easily at low costs.

In an embodiment, said refrigerant circuit is configured for using a refrigerant which comprises CO₂.

While the invention has been described with reference to an exemplary embodiment, it will be understood by those skilled in the art that various changes may be made and equivalents may be substituted for elements thereof without departing from the scope of the invention. Therefore, it is intended that the invention is not limited to the particular embodiment disclosed, but that the invention will include all embodiments falling within the scope of the appended claims.

### Reference Numerals

- 1: refrigerant collecting container unit
- 2: refrigerant collecting container
- 2a: upper portion of the collecting container
- 2b: lower portion of the collecting container
- 2c: outer wall of the collecting container
- 3: device for determining the filling height of liquid in the container
- 4a, 4b: temperature sensors
- 6: heating device
- 7: heating elements
- 8: thermally insulating jacket or coating of the collecting container
- 10: inlet line
- 11: inlet port
- 12: outlet line
- 13: outlet port
- 14: liquid portion of the refrigerant
- 15: level of the liquid portion of the refrigerant
- 16: measurement pipe
- 16a: lower portion of the measurement pipe
- 16b: upper portion of the measurement pipe
- 16c: vertical portion of the measurement pipe
- 18: thermally insulating jacket or coating of the measurement pipe
- 20: analysing unit
- 21: resistance measuring unit
- 22: compressor unit
- 24: condenser
- 26: expansion device
- 28: evaporator
- 30: refrigerant circuit
- 32: flash gas tapping line
- 34: flash-gas tapping valve

## Claims

1. Device (3) for determining the filling height of liquid refrigerant (14) in a refrigerant collecting container (2) of a refrigerant circuit (30), the device (3) comprising:
a plurality of temperature sensors (4a, 4b) arranged in one extension at different, particularly equidistant positions;
at least one heating device (6) configured for heating the temperature sensors (4a, 4b);
wherein the plurality of temperature sensors (4a, 4b) and the at least one heating device (6) are configured to be positioned along a vertical extension of the container (2), and
an analysing unit (20)
connected to the temperature sensors (4a, 4b) for receiving output signals from the temperature sensors (4a, 4b), and
configured to determine the filling height of liquid refrigerant (14) within in the container (2) based on the output signals received from the temperature sensors (4a, 4b)
**characterized in that** the device (3) further comprises a measurement pipe (16) arranged to be fluidly connected to the refrigerant collecting container (2), wherein the temperature sensors (4a, 4b) are attached to the measurement pipe (16).

2. Device (3) of claim 1, wherein the analysing unit (20) is configured to take into account that the temperature sensors (4a, 4b) which are positioned at positions of height where there is no liquid refrigerant (14) in the container (2) are heated to a higher temperature than temperature sensors (4a, 4b) which are positioned at positions of height where there is liquid refrigerant (14) in the container (2).

3. Device (3) of claim 1 or 2, wherein the temperature sensors (4a, 4b) are formed as temperature sensitive resistors, wherein the temperature sensitive resistors (4a, 4b) are in particular connected in parallel or serially to each other.

4. Device (3) of claim 3, wherein the analysing unit (20) comprises a total resistance measuring unit (21) which is configured to measure the total resistance value of the temperature sensitive resistors (4a, 4b), such total resistance value being indicative of the filling height of liquid in the container (2).

5. Device (3) of claim 4, further comprising a series resistor (5) serially connected with the temperature sensitive resistors (4a, 4b), wherein the series resistor (5) is in particular adjustable and/or located within the analysing unit (20).

6. Device (3) of any of the preceding claims, wherein the heating device (6) comprises a plurality of heating elements (7), in particular PTC-elements, and/or a self-regulating heating cable, wherein the temperature sensors (4a, 4b) in particular are operable as heating elements (7).

7. Device (3) of any of the preceding claims, wherein the temperature sensors (4a, 4b) are located adjacent to the heating device (6).

8. Device (3) of any of the preceding claims, wherein the temperature sensors (4a, 4b) and the heating device (6) are provided in one unit.

9. Refrigerant collecting container unit (1) of a refrigerant circuit (30) comprising:
a refrigerant collecting container (2), particularly a CO₂ flash gas receiver, with an upper portion (2a) where gaseous refrigerant collects, a lower portion (2b) where liquid refrigerant (14) collects, an inlet port (11) at an upper portion of the container (2) to be connected with an inlet line (10), particularly for receiving refrigerant, and an outlet port (13) at a lower portion (2b) of the container (2) to be connected with an outlet line (12), particularly for feeding liquid refrigerant (14) from the refrigerant collecting container (2) to an expansion device (26) and an evaporator (28) downstream, and
a device (3) for determining the filling height of liquid refrigerant (14) according to any of the preceding claims,
wherein the plurality of temperature sensors (4a, 4b) and the at least one heating device (6) are positioned along a vertical extension of the refrigerant collecting container unit (1).

10. Refrigerant collecting container unit (1) of claim 9, wherein the measurement pipe (16) is connected in parallel to the refrigerant collecting container (2), with a first portion (16a) of the measurement pipe (16) branching off from the inlet line (12) of the refrigerant collecting container (2) and a second portion (16b) of the measurement pipe (16) fluidly connected to the outlet line (10) of the refrigerant collecting container (2).

11. Refrigerant collecting container unit (1) of any of claims 9 or 10, wherein the temperature sensors (4a, 4b) are sandwiched between the heating device (6) and the measurement pipe (16).

12. Refrigerant collecting container unit (1) of claim 9, wherein the temperature sensors (4a, 4b) are attached to the outside of the refrigerant collecting container (2), wherein the temperature sensors (4a, 4b) are in particular sandwiched between the heating device (6) and the refrigerant collecting container (2).

13. Refrigerant circuit (30) comprising, in the direction of flow of the refrigerant,
a compressor unit (22);
a condenser (24);
a refrigerant collecting container unit (1) according to any of claims 9 to 12,
an expansion device (26) and
an evaporator (28).

14. Refrigerant circuit (30) according to claim 13, wherein the refrigerant comprises CO₂.

15. Method of determining the filling height of liquid refrigerant (14) in a refrigerant collecting container (2) of a refrigerant circuit (30), the method comprising the steps of:
heating a plurality of temperature sensors (4a, 4b) attached at different heights to a measurement pipe (16), which is fluidly connected to the refrigerant collecting container (2) and which extends along a vertical extension of the refrigerant collecting container (2); and
determining the filling height of liquid refrigerant (14) within in the refrigerant collecting container (2) based on output signals provided by the temperature sensors (4a, 4b).

## Patentansprüche

1. Vorrichtung (3) zum Ermitteln der Füllhöhe eines flüssigen Kältemittels (14) in einem Kältemittelsammelbehälter (2) eines Kältemittelkreislaufs (30), wobei die Vorrichtung (3) Folgendes umfasst:
eine Vielzahl von Temperatursensoren (4a, 4b), die entlang einer Erstreckung an verschiedenen, vorzugsweise abstandsgleichen Positionen angeordnet sind;
mindestens eine Heizvorrichtung (6), die zum Erwärmen der Temperatursensoren (4a, 4b) konfiguriert ist;
wobei die Vielzahl von Temperatursensoren (4a, 4b) und die mindestens eine Heizvorrichtung (6) so konfiguriert sind, dass sie entlang einer vertikalen Erstreckung des Behälters (2) angeordnet sind, und
eine Analyseeinheit (20),
die mit den Temperatursensoren (4a, 4b) verbunden ist, um Ausgabesignale von den Temperatursensoren (4a, 4b) zu empfangen, und
so konfiguriert ist, dass sie die Füllhöhe von flüssigem Kältemittel (14) innerhalb des Behälters (2) basierend auf den Ausgabesignalen, die von den Temperatursensoren (4a, 4b) empfangen werden, ermittelt,
**dadurch gekennzeichnet, dass** die Vorrichtung (3) ferner ein Messrohr (16) umfasst, das so angeordnet ist, dass es fluidmäßig mit dem Kältemittelsammelbehälter (2) verbunden ist, wobei die Temperatursensoren (4a, 4b) an dem Messrohr (16) befestigt sind.

2. Vorrichtung (3) nach Anspruch 1, wobei die Analyseeinheit (20) so konfiguriert ist, dass sie berücksichtigt, dass die Temperatursensoren (4a, 4b), die an Höhenpositionen angeordnet sind, an denen kein flüssiges Kältemittel (14) in dem Behälter (2) vorhanden ist, auf eine höhere Temperatur erwärmt werden als Temperatursensoren (4a, 4b), die an Höhenpositionen angeordnet sind, an denen flüssiges Kältemittel (14) in dem Behälter (2) vorhanden ist.

3. Vorrichtung (3) nach Anspruch 1 oder 2, wobei die Temperatursensoren (4a, 4b) als temperaturempfindliche Widerstände ausgebildet sind, wobei die temperaturempfindlichen Widerstände (4a, 4b) insbesondere parallel oder in Reihe miteinander verbunden sind.

4. Vorrichtung (3) nach Anspruch 3, wobei die Analyseeinheit (20) eine Gesamtwiderstandsmesseinheit (21) umfasst, die so konfiguriert ist, dass sie den Gesamtwiderstandswert der temperaturempfindlichen Widerstände (4a, 4b) misst, wobei dieser Gesamtwiderstandswert die Füllhöhe der Flüssigkeit in dem Behälter (2) angibt.

5. Vorrichtung (3) nach Anspruch 4, ferner einen Serienwiderstand (5) umfassend, der in Reihe mit den temperaturempfindlichen Widerständen (4a, 4b) verbunden ist, wobei der Serienwiderstand (5) insbesondere einstellbar und/oder innerhalb der Analyseeinheit (20) angeordnet ist.

6. Vorrichtung (3) nach einem der vorstehenden Ansprüche, wobei die Heizvorrichtung (6) eine Vielzahl von Heizelementen (7), insbesondere PTC-Elemente, und/oder ein selbstreguliendes Heizband umfasst, wobei die Temperatursensoren (4a, 4b) insbesondere als Heizelemente (7) betrieben werden können.

7. Vorrichtung (3) nach einem der vorstehenden Ansprüche, wobei die Temperatursensoren (4a, 4b) an die Heizvorrichtung (6) angrenzend angeordnet sind.

8. Vorrichtung (3) nach einem der vorstehenden Ansprüche, wobei die Temperatursensoren (4a, 4b) und die Heizvorrichtung (6) in einer Einheit bereitgestellt sind.

9. Kältemittelsammelbehältereinheit (1) eines Kältemittelkreislaufs (30), umfassend:
einen Kältemittelsammelbehälter (2), insbesondere einen CO₂-Flash-Gas-Behälter, mit einem oberen Abschnitt (2a), in dem sich gasförmiges Kältemittel sammelt, einem unteren Abschnitt (2b), in dem sich flüssiges Kältemittel (14) sammelt, einer Eintrittsöffnung (11) an einem oberen Abschnitt des Behälters (2), die mit einer Einlassleitung (10) zu verbinden ist, insbesondere zum Aufnehmen von Kältemittel, und einer Auslassöffnung (13) an einem unteren Abschnitt (2b) des Behälters (2), die mit einer Auslassleitung (12) zu verbinden ist, insbesondere zum Zuführen flüssigen Kältemittels (14) von dem Kältemittelsammelbehälter (2) zu einer Expansionsvorrichtung (26) und einem Verdampfer (28) stromabwärts, und
eine Vorrichtung (3) zum Ermitteln der Füllhöhe von flüssigem Kältemittel (14) nach einem der vorstehenden Ansprüche,
wobei die Vielzahl von Temperatursensoren (4a, 4b) und die mindestens eine Heizvorrichtung (6) entlang einer vertikalen Erstreckung der Kältemittelsammelbehältereinheit (1) angeordnet sind.

10. Kältemittelsammelbehältereinheit (1) nach Anspruch 9, wobei das Messrohr (16) parallel mit dem Kältemittelsammelbehälter (2) verbunden ist, wobei ein erster Abschnitt (16a) des Messrohrs (16) von der Einlassleitung (12) des Kältemittelsammelbehälters (2) abzweigt und ein zweiter Abschnitt (16b) des Messrohrs (16) in Fluidverbindung mit der Auslassleitung (10) des Kältemittelsammelbehälters (2) steht.

11. Kältemittelsammelbehältereinheit (1) nach einem der Ansprüche 9 oder 10, wobei die Temperatursensoren (4a, 4b) zwischen der Heizvorrichtung (6) und dem Messrohr (16) eingeklemmt sind.

12. Kältemittelsammelbehältereinheit (1) nach Anspruch 9, wobei die Temperatursensoren (4a, 4b) an der Außenseite des Kältemittesammelbehälters (2) befestigt sind, wobei die Temperatursensoren (4a, 4b) insbesondere zwischen der Heizvorrichtung (6) und dem Kältemittelsammelbehälter (2) eingeklemmt sind.

13. Kältemittelkreislauf (30), der in der Strömungsrichtung des Kältemittels,
eine Kompressoreinheit (22);
einen Kondensator (24);
eine Kältemittelsammelbehältereinheit (1) nach einem der Ansprüche 9 bis 12,
ein Expansionsorgan (26) und
einen Verdampfer (28) umfasst.

14. Kältemittelkreislauf (30) nach Anspruch 13, wobei das Kältemittel CO₂ umfasst.

15. Verfahren zum Ermitteln der Füllhöhe von flüssigem Kältemittel (14) in einem Kältemittelsammelbehälter (2) eines Kältemittelkreislaufs (30), wobei das Verfahren die folgenden Schritte umfasst:
Erwärmen einer Vielzahl von Temperatursensoren (4a, 4b), die auf verschiedenen Höhen an einem Messrohr (16) angebracht sind, das in Fluidverbindung mit dem Kältemittelsammelbehälter (2) steht und sich entlang einer vertikalen Erstreckung des Kältemittelsammelbehälters (2) erstreckt; und
Ermitteln der Füllhöhe von flüssigem Kältemittel (14) innerhalb des Kältemittelsammelbehälters (2) basierend auf Ausgabesignalen, die von dem Temperatursensoren (4a, 4b) bereitgestellt werden.

## Revendications

1. Dispositif (3) permettant de déterminer la hauteur de remplissage de réfrigérant liquide (14) dans un récipient collecteur de réfrigérant (2) d'un circuit réfrigérant (30), le dispositif (3) comprenant :
une pluralité de capteurs de température (4a, 4b) agencés dans une extension à des positions différentes, en particulier équidistantes ;
au moins un dispositif de chauffage (6) configuré pour chauffer les capteurs de température (4a, 4b) ;
dans lequel la pluralité de capteurs de température (4a, 4b) et l'au moins un dispositif de chauffage (6) sont configurés pour être positionnés le long d'une extension verticale du récipient (2), et
une unité d'analyse (20)
reliée aux capteurs de température (4a, 4b) pour recevoir des signaux de sortie depuis les capteurs de température (4a, 4b), et
configurée pour déterminer la hauteur de remplissage de réfrigérant liquide (14) à l'intérieur du récipient (2) sur la base des signaux de sortie reçus depuis les capteurs de température (4a, 4b)
**caractérisé en ce que** le dispositif (3) comprend en outre un tuyau de mesure (16) agencé pour être relié fluidiquement au récipient collecteur de réfrigérant (2), dans lequel les capteurs de température (4a, 4b) sont fixés au tuyau de mesure (16) .

2. Dispositif (3) selon la revendication 1, dans lequel l'unité d'analyse (20) est configurée pour prendre en compte que les capteurs de température (4a, 4b) qui sont positionnés à des positions de hauteur où il n'y a pas de réfrigérant liquide (14) dans le récipient (2) sont chauffés à une température plus élevée que les capteurs de température (4a, 4b) qui sont positionnés à des positions de hauteur où du réfrigérant liquide (14) est présent dans le récipient (2).

3. Dispositif (3) selon la revendication 1 ou 2, dans lequel les capteurs de température (4a, 4b) sont formés comme des résistances sensibles à la température, dans lequel les résistances sensibles à la température (4a, 4b) sont en particulier reliées en parallèle ou en série les unes aux autres.

4. Dispositif (3) selon la revendication 3, dans lequel l'unité d'analyse (20) comprend une unité de mesure de résistance totale (21) qui est configurée pour mesurer la valeur de résistance totale des résistances sensibles à la température (4a, 4b), cette valeur de résistance totale indiquant la hauteur de remplissage de liquide dans le récipient (2).

5. Dispositif (3) selon la revendication 4, comprenant en outre une résistance série (5) reliée en série avec les résistances sensibles à la température (4a, 4b), dans lequel la résistance série (5) est en particulier réglable et/ou située à l'intérieur de l'unité d'analyse (20).

6. Dispositif (3) selon l'une quelconque des revendications précédentes, dans lequel le dispositif de chauffage (6) comprend une pluralité d'éléments chauffants (7), en particulier des éléments PTC et/ou un câble chauffant autorégulant, dans lequel les capteurs de température (4a, 4b) en particulier sont utilisables comme éléments chauffants (7).

7. Dispositif (3) selon l'une quelconque des revendications précédentes, dans lequel les capteurs de température (4a, 4b) sont situés de manière adjacente au dispositif de chauffage (6).

8. Dispositif (3) selon l'une quelconque des revendications précédentes, dans lequel les capteurs de température (4a, 4b) et le dispositif de chauffage (6) sont fournis dans une unité.

9. Unité de récipient collecteur de réfrigérant (1) d'un circuit réfrigérant (30) comprenant :
un récipient collecteur de réfrigérant (2), en particulier un récepteur de gaz de détente de CO₂, avec une partie supérieure (2a) où un réfrigérant gazeux est collecté, une partie inférieure (2b) où un réfrigérant liquide (14) est collecté, un orifice d'entrée (11) au niveau d'une partie supérieure du récipient (2) à relier à une conduite d'entrée (10), en particulier pour recevoir un réfrigérant, et un orifice de sortie (13) au niveau d'une partie inférieure (2b) du récipient (2) à relier à une conduite de sortie (12), en particulier pour l'alimentation de réfrigérant liquide (14) depuis le récipient collecteur de réfrigérant (2) vers un dispositif de détente (26) et un évaporateur (28) en aval, et
un dispositif (3) pour déterminer la hauteur de remplissage de réfrigérant liquide (14) selon l'une quelconque des revendications précédentes,
dans laquelle la pluralité de capteurs de température (4a, 4b) et l'au moins un dispositif de chauffage (6) sont positionnés le long d'une extension verticale de l'unité de récipient collecteur de réfrigérant (1).

10. Unité de récipient collecteur de réfrigérant (1) selon la revendication 9, dans laquelle le tuyau de mesure (16) est relié en parallèle au récipient collecteur de réfrigérant (2), avec une première partie (16a) du tuyau de mesure (16) se ramifiant depuis la conduite d'entrée (12) du récipient collecteur de réfrigérant (2) et une seconde partie (16b) du tuyau de mesure (16) reliée fluidiquement à la conduite de sortie (10) du récipient collecteur de réfrigérant (2).

11. Unité de récipient collecteur de réfrigérant (1) selon l'une quelconque des revendications 9 ou 10, dans laquelle les capteurs de température (4a, 4b) sont pris en sandwich entre le dispositif de chauffage (6) et le tuyau de mesure (16).

12. Unité de récipient collecteur de réfrigérant (1) selon la revendication 9, dans laquelle les capteurs de température (4a, 4b) sont fixés à l'extérieur du récipient collecteur de réfrigérant (2), dans laquelle les capteurs de température (4a, 4b) sont en particulier pris en sandwich entre le dispositif de chauffage (6) et le récipient collecteur de réfrigérant (2).

13. Circuit réfrigérant (30) comprenant, dans le sens d'écoulement du réfrigérant,
une unité de compresseur (22) ;
un condenseur (24) ;
une unité de récipient collecteur de réfrigérant (1) selon l'une quelconque des revendications 9 à 12,
un dispositif de détente (26) et
un évaporateur (28).

14. Circuit réfrigérant (30) selon la revendication 13, dans lequel le réfrigérant comprend du CO₂.

15. Procédé de détermination de la hauteur de remplissage de réfrigérant liquide (14) dans un récipient collecteur de réfrigérant (2) d'un circuit réfrigérant (30), le procédé comprenant les étapes de :
chauffage d'une pluralité de capteurs de température (4a, 4b) fixés à différentes hauteurs à un tuyau de mesure (16), qui est relié fluidiquement au récipient collecteur de réfrigérant (2) et qui s'étend le long d'une extension verticale du récipient collecteur de réfrigérant (2) ; et
détermination de la hauteur de remplissage de réfrigérant liquide (14) à l'intérieur du récipient collecteur de réfrigérant (2) sur la base de signaux de sortie fournis par les capteurs de température (4a, 4b).
